# EUROPÄISCHE PATENTSCHRIFT

(11) **EP 3 756 158 B1**
(45) Veröffentlichungstag und Bekanntmachung des Hinweises auf die Patenterteilung: **23.08.2023**
(21) Anmeldenummer: 19705350.7
(22) Anmeldetag: 14.02.2019
(51) Int. Cl.: G06T 7/00

(54) **VERFAHREN ZUR BESTIMMUNG VON FEHLERN VON AUS DIGITALEN OBJEKTDARSTELLUNGEN ABGELEITETEN PARAMETERN**
METHOD FOR DETERMINING ERRORS IN PARAMETERS DERIVED FROM DIGITAL OBJECT REPRESENTATIONS
PROCÉDÉ POUR DÉTERMINER DES ERREURS DANS DES PARAMÈTRES DÉRIVÉS DE REPRÉSENTATIONS D'OBJETS NUMÉRIQUES

(30) Priorität: 20.02.2018 DE 102018103714
(43) Veröffentlichungstag der Anmeldung: 30.12.2020
(73) Patentinhaber: Volume Graphics GmbH, 69115 Heidelberg (DE)
(72) Erfinder: GÜNTHER, Thomas, 69115 Heidelberg (DE); REINHART, Christof, 69115 Heidelberg (DE); POLIWODA, Christoph, 69115 Heidelberg (DE)
(74) Vertreter: Patentanwälte Olbricht Buchhold Keulertz
(86) Internationale Anmeldenummer: PCT/EP2019/053665
(87) Internationale Veröffentlichungsnummer: WO 2019/162182

(56) Entgegenhaltungen:
- US-A1- 2005 111 760
- DEWULF WIM ET AL: "Uncertainty determination and quantification for dimensional measurements with industrial computed tomography", CIRP ANNALS, ELSEVIER BV, NL, CH, FR, Bd. 62, Nr. 1, 15. April 2013 (2013-04-15) , Seiten 535-538, XP028565574, ISSN: 0007-8506, DOI: 10.1016/J.CIRP.2013.03.017
- ROBERT SCHMITT ET AL: "Uncertainty in measurement for x-ray-computed tomography using calibrated work pieces", MEASUREMENT SCIENCE AND TECHNOLOGY, IOP, BRISTOL, GB, Bd. 21, Nr. 5, 1. Mai 2010 (2010-05-01), Seite 54008, XP020174507, ISSN: 0957-0233
- IKRAM E ABDOU ET AL: "Survey of image quality measurements", 19861102, 2. November 1986 (1986-11-02), Seiten 71-78, XP058128400, ISBN: 978-0-8186-4743-7
- JOCHEN HILLER ET AL: "Physical characterization and performance evaluation of an x-ray micro-computed tomography system for dimensional metrology applications", MEASUREMENT SCIENCE AND TECHNOLOGY, IOP, BRISTOL, GB, Bd. 23, Nr. 8, 14. Juni 2012 (2012-06-14), Seite 85404, XP020227263, ISSN: 0957-0233, DOI: 10.1088/0957-0233/23/8/085404
- KETCHAM RICHARD A ET AL: "Characterizing, measuring, and utilizing the resolution of CT imagery for improved quantification of fine-scale features", NUCLEAR INSTRUMENTS & METHODS IN PHYSICS RESEARCH. SECTION B: BEAM INTERACTIONS WITH MATERIALS AND ATOMS, Bd. 324, 1. April 2014 (2014-04-01), Seiten 80-87, XP028624680, ISSN: 0168-583X, DOI: 10.1016/J.NIMB.2013.08.064

## Beschreibung

Die Erfindung betrifft ein computer-implementiertes Verfahren zur Bestimmung von Fehlern wenigstens eines aus einer digitalen Darstellung eines Objekts abgeleiteten Parameters des Objekts gemäß dem Oberbegriff von Anspruch 1.

Im Bereich der Werkstückprüfung haben sich in den vergangenen Jahren eine Vielzahl von bildgebenden Verfahren etabliert, welche eine Untersuchung sowohl einer Oberfläche eines Werkstücks, als auch einer inneren Struktur des Werkstücks erlauben. Insbesondere sind hierbei bezüglich einer Untersuchung der inneren Struktur eines Werkstücks die Computertomographie, die Magnetresonanz-Tomographie und die Sonographie zu nennen. Im Rahmen einer mittels eines der vorgenannten Verfahren durchgeführten Werkstückprüfung ist dabei häufig eine Bemaßung eines Werkstücks bzw. einer Teilgeometrie des Werkstücks hinsichtlich einer Übereinstimmung mit vorgegeben Sollwerten zu überprüfen. Hierzu muss zunächst aus den im Rahmen einer Messung ermittelten Bildinformationen, welche häufig als Grauwerte vorliegen, eine Geometrie des dargestellten Werkstücks anhand der Positionen der jeweiligen Materialgrenzflächen ermittelt werden.

Um eine Vergleichbarkeit von derart ermittelten Bemaßungen mit vorgegeben Richtwerten, beispielsweise aus einer technischen Zeichnung oder Konstruktionszeichnung zu erhalten, ist dabei im Allgemeinen die Angabe einer Unsicherheit einer Bemaßung aus der Analyse der Grauwerte notwendig. Analoge Überlegungen gelten auch für beliebige andere Parameter eines Werkstücks, welche aus der Analyse von Grauwerten ermittelt werden können, wie beispielsweise Positionen von Merkmalen, Schichtdicken, Porosität oder ähnliches. Die Ermittlung derartiger Unsicherheiten ist dabei jedoch zumeist mit einem erheblichen Rechenaufwand verbunden, was eine effiziente Verwendung der zerstörungsfreien Werkstückprüfung beispielsweise im Bereich der In-Line Werkstückprüfung impraktikabel erscheinen lässt.

Die Veröffentlichungen Dewulf et al: "Uncertainty determination and quantification for dimensional measurements with industrial computed tomography", 2013, CIRP ANNALS, ELSEVIER und Schmitt et al: "Uncertainty in measurement for x-ray-computed tomography using calibrated work pieces", 2010, MEASUREMENT SCIENCE AND TECHNOLOGY, IOP, befassen sich mit dem Einsatz der Computertomographie (CT) zum Zweck der Qualitätskontrolle von Abmessungen und mit dem Problem der Ermittlung der Messunsicherheit solcher CT-basierten Messungen.

Patentanmeldung US 2005/111760 A1 (LAL RAKESH M [US] ET AL) offenbart ein Verfahren zur Verbesserung der Analyse digitaler Bilder durch die Bestimmung einer optimalen Abtastrate der Bilddaten, z.B. auf der Grundlage der Point-Spread-Funktion des Bildgebungssystems, und die Reduzierung der Abtastrate des Bildes auf eine Rate, die eine optimale Bildfilterung ermöglicht.

Der vorliegenden Erfindung liegt daher die Aufgabe zugrunde, ein computer-implementiertes Verfahren zu schaffen, das eine effizientere Bestimmung von Unsicherheiten bzw. Fehlern für aus einer digitalen Darstellung des Objekts abgeleitete Parameter erlaubt.

Hauptmerkmale der Erfindung sind in Anspruch 1, sowie in dem Anspruch 14 angegeben. Ausgestaltungen sind Gegenstand der Ansprüche 2 bis 13.

In einem ersten Aspekt betrifft die Erfindung ein computer-implementiertes Verfahren zur Bestimmung von Fehlern wenigstens eines aus einer digitalen Darstellung eines Objekts abgeleiteten Parameters des Objekts, wobei die digitale Darstellung eine Vielzahl von in einem Raster angeordneten Bildpunkten aufweist. Dabei ist einem Bildpunkt wenigstens eine Bildinformation zugeordnet, welche einen materialspezifischen Wert des Objekts an der Position des Bildpunktes quantifiziert. Die Bildinformation resultiert wiederum aus einer messtechnischen Abbildung des Objekts und ist mit einem statistischen Rauschen überlagert. Aufgrund der messtechnischen Abbildung des Objekts ist die Bildinformation eines ersten Bildpunktes mit den Bildinformationen von Bildpunkten innerhalb einer durch eine Korrelationslänge der Bildinformation definierten Umgebung des ersten Bildpunktes korreliert. Das Verfahren weist dabei zunächst das Ermitteln der Objektdarstellung und das anschließende Ermitteln der Korrelationslänge der Objektdarstellung auf. Anschließend wird eine erste Teilmenge von Bildpunkten aus der Vielzahl von Bildpunkten ermittelt, wobei die Bildpunkte der ersten Teilmenge von Bildpunkten in der Objektdarstellung um wenigstens die Korrelationslänge voneinander beabstandet sind. Aus den Bildinformationen der ersten Teilmenge von Bildpunkten wird dann der wenigstens ein Parameter ermittelt und ein Fehler für den ermittelten wenigstens einen Parameter aus den Bildinformationen der ersten Teilmenge von Bildpunkten ermittelt.

Der vorliegenden Erfindung liegt die Erkenntnis zugrunde, dass die Bestimmung eines Fehlers aus einer Menge von fehlerbehafteten Messwerten vereinfacht werden kann, wenn die für die Bestimmung eines Parameters zugrunde gelegten Messwerte und auch deren Fehler statistisch nicht miteinander korreliert sind. In diesem Fall kann die Bestimmung eines Fehlers eines Parameters aus den Fehlern der Messwerte, welche der Bestimmung des Parameters zugrunde gelegt wurden, im Allgemeinen mittels einer einfacheren Mathematik erfolgen, als bei korrelierten Messwerten. Ferner liegt der Erfindung die Erkenntnis zugrunde, dass das Auslassen von Messwerten, welche ohnehin mit weiteren in einer Rechnung berücksichtigten Messwerten korreliert sind, keinen Informationsverlust bedeutet, da die Information der ausgelassenen Messwerte aufgrund der Korrelation der Messwerte auch in den jeweils mit einem ausgelassenen Bildpunkt korrelierten Bildpunkten enthalten ist. Folglich kann durch das erfindungsgemäße Verfahren der Rechenaufwand zur Bestimmung eines Fehlers für einen aus einer digitalen Darstellung abgeleiteten Parameter eines Werkstücks reduziert werden, ohne die Genauigkeit des Ergebnisses zu verschlechtern.

Bei einem "Fehler" handelt es sich dabei im Kontext der vorliegenden Anmeldung stets um eine Unsicherheit im Sinne eines statistischen Fehlers, also eines Fehlers, der einer statistischen Verteilung folgt. Ein Beispiel für die Quelle eines solchen statistischen Fehlers ist das zuvor benannte Rauschen von Bildinformationen, welches meist - an jedem individuellen Bildpunkt - einer Gaußverteilung folgt. Je nach messtechnischer Anordnung kann das statistische Rauschen an einem Bildpunkt mit dem Rauschen an anderen Bildpunkten korreliert sein, d.h. die statistischen Werte sind nicht unabhängig voneinander.

Die Bildinformation eines Bildpunktes setzt sich dabei im Wesentlichen aus zwei Anteilen zusammen. Der erste Anteil einer Bildinformation ist das eigentliche Signal, welches aus der messtechnischen Abbildung des Objekts resultieren würde, wenn die Ermittlung der Bildinformation keinem Rauschen unterliegen würde. Dabei unterliegt das Signal auch ohne den Einfluss eines statistischen Rauschens bereits einer Reihe von systematischen Unschärfen, welche unter anderem durch das abbildende System verursacht werden. Eine solche Abbildungsunschärfe induziert ebenfalls einen Zusammenhang zwischen Bildpunkten, bspw. durch "Verschmieren" eines Messwertes über mehrere Bildpunkte. Dieser Zusammenhang zwischen Bildpunkten aufgrund einer systematischen Unschärfe wird im Folgenden auch als "Korrelation" verstanden. Der zweite Anteil der Bildinformation ist das statistische Rauschen, welches jedes Signal überlagert und einen additiven Beitrag zu der Bildinformation liefert. Das Rauschen in einem Bildpunkt wird ebenfalls durch das abbildende System hervorgerufen und unterliegt einer statistischen Verteilung. Beispielsweise kann ein Rauschen durch die Auswerteelektronik eines abbildenden Systems erzeugt werden (thermisches Rauschen). Durch die zuvor beschriebene Unschärfe eines abbildenden Systems wird das statistische Rauschen, welches in einzelnen Bildpunkten das Signal überlagert, über mehrere Bildpunkte verschmiert, wodurch eine Korrelation des Rauschens und folglich der Bildinformation mehrerer Punkte induziert wird.

Die Korrelation der Bildinformationen erstreckt sich dabei über eine Korrelationslänge, über die die Bildinformation eines ersten Bildpunkts mit Bildinformationen von Bildpunkten, welche um weniger als die Korrelationslänge von dem ersten Bildpunkt beabstandet sind, als "korreliert" angesehen werden. Die Bildinformation von Bildpunkten, deren Abstand voneinander größer als die Korrelationslänge ist, wird als "unkorreliert" angesehen. Die Bezeichnung von Bildinformationen als "unkorreliert" bedeutet in diesem Kontext nicht, dass die Bildinformation in keiner Korrelation zueinander stehen. Vielmehr werden Bildinformationen von Bildpunkten als unkorreliert angesehen, wenn die Stärke der Korrelation der Bildinformationen einen definierten Grenzwert unterschreitet.

Bei einer "digitalen Darstellung" eines Objekts handelt es sich dabei um eine zwei- oder dreidimensionale Darstellung des Objekts, bei der räumlich festgelegten Bildpunkten jeweils Bildinformationen zugeordnet sind, welche eine Abbildung des Objekts ermöglichen. Die Bildpunkte können dabei sowohl regelmäßig als auch unregelmäßig angeordnet sein. Die in den Bildinformationen kodierten "materialspezifischen Werte" des dargestellten Objekts können für die Position eines Bildpunktes beispielsweise die Materialbeschaffenheit an der Position des Bildpunktes darstellen, also beispielsweise welche Art Material an einem Bildpunkt vorliegt. Ferner kann die Bildinformation auch eine physikalische Eigenschaft des Materials abbilden, beispielsweise dessen Dichte.

Ein "materialspezifischer Wert" kann dabei ein für das verwendete bildgebende Verfahren charakteristischer Wert sein. Am Beispiel der Magnetresonanztomographie handelt es sich bei dem materialspezifischen Wert beispielsweise um eine Kernspin-Relaxationszeit. Durch Wiedergabe solcher Werte kann die Struktur eines dargestellten Objekts und insbesondere dessen genaue Geometrie dargestellt werden. Zur Ermittlung einer solchen Objektdarstellung kann beispielsweise eine Messung mit einer geeigneten Messvorrichtung durchgeführt werden, oder es können entsprechende Messwerte aus einem Speichermedium abgerufen werden Beispielsweise kann ein dargestelltes Objekt mit einem Raster überlagert sein, wobei an definierten Rasterpunkten jeweils ein lokaler materialspezifischer Wert des Objekts wiedergegeben wird. Die Wiedergabe eines solchen materialspezifischen Werts kann beispielsweise mittels eines Grauwerts erfolgen, welcher Werte zwischen beispielsweise 0 und 65535 annehmen kann, was einer Darstellung mit einer Tiefe von 16 Bit entspricht.

Ferner kann ein materialspezifischer Wert auch das Vorhandensein einer Materialgrenzfläche und insbesondere einer Oberfläche des dargestellten Objekts kodieren. Unter einer "Materialgrenzfläche" ist dabei eine Fläche des Objekts zu verstehen, in der unterschiedliche Materialien des Objekts aneinanderstoßen, oder entlang derer das Objekt gegenüber seiner Umgebung begrenzt ist. Dabei kann beispielsweise vorgesehen sein, dass die Bildpunkte der Objektdarstellung so angeordnet sind, dass alle Bildpunkte auf der Oberfläche des Objekts liegen und folglich ausschließlich die geometrische Form des Objekts nachbilden. In diesem Fall bedeutet das "Ermitteln der Objektdarstellung" das Ableiten eines Oberflächenmodells aus den zuvor beschriebenen Grauwerten.

Dabei schlägt sich das Rauschen von Grauwerten direkt auch in der Genauigkeit der Findung von Materialgrenzflächen nieder, wodurch folglich auch die Bildinformationen zu einer Position einer Materialgrenzfläche mit einer Unsicherheit in Form eines Rauschens belegt sind.

Unter dem "Ermitteln einer Objektdarstellung" kann neben der Durchführung einer Messung auch das Auslesen eines Datenspeichers verstanden werden, auf dem eine entsprechende Objektdarstellung enthalten ist.

Aus der Struktur und der Geometrie eines Objekts werden dann im Rahmen einer Datenauswertung wiederum spezifische Parameter des dargestellten Objekts abgeleitet. Beispielsweise kann unter einem Parameter die Lage der das dargestellte Objekt begrenzenden Materialgrenzflächen gemeint sein. Diese können aus den durch Anwendung des bildgebenden Verfahrens erhaltenen Grauwerten mit im Stand der Technik bekannten Verfahren abgeleitet werden. Ferner kann ein Parameter auch, wie eingangs erwähnt, eine Bemaßung einer Teilgeometrie des Objekts oder eine lokale Eigenschaft eines Materials, wie beispielsweise dessen Porosität wiedergeben. Eine Bemaßung einer Teilgeometrie des Objekts lässt sich beispielsweise aus der Kenntnis der Lage von Oberflächen durch Anwendung eines Geometriefits ableiten.

Wie zuvor bereits beschrieben wurde, sind die mit Hilfe eines bildgebenden Verfahrens ermittelten Bildinformationen der digitalen Darstellung eines Objekts mit einem statistischen Rauschen überlagert. Ein solches statistisches Rauschen kann beispielsweise durch die Messanordnung selbst verursacht werden, oder kann im Rahmen der Verarbeitung der bei einer Messung erzeugten elektronischen Signale entstehen. Nach einer Ausführungsform des Verfahrens beinhaltet das Ermitteln des Fehlers daher das Ermitteln der Stärke des statistischen Rauschens von Bildinformationen der Bildpunkte, wobei der Fehler der Bildinformationen aus der Stärke des statistischen Rauschens abgeleitet wird. Die Verwendung des statistischen Rauschens als Ausgangspunkt für eine Fehlerbetrachtung ist insbesondere vorteilhaft, wenn die Unsicherheit von Bildinformationen maßgeblich von der Stärke des statistischen Rauschens der digitalen Abbildung verursacht wird. Dabei kann das statistische Rauschen beispielsweise als globaler Wert der Messapparatur abgeschätzt werden, oder kann aus entsprechenden Datenquellen ermittelt werden, welche eine Information bezüglich des Rauschverhaltens einer Messapparatur enthält.

Nach einer bevorzugten Ausführungsform wird die Stärke des statistischen Rauschens jedoch direkt aus den Bildinformationen der Bildpunkte ermittelt. Dies hat den Vorteil, dass eventuelle Abweichung des Rauschverhaltens von einem globalen Wert sicher erfasst werden können, sodass eine belastbare Abschätzung eines Fehlers möglich wird.

Bei der Stärke des statistischen Rauschens handelt es sich dabei nach einer weiteren Ausführungsform um die Standardabweichung der Amplitude des statistischen Rauschens. Die Verwendung der Standardabweichung hat dabei den Vorteil, dass lokale Extrema der durch Rauschen bedingten Ausschläge von Bildinformationen ausgeglichen werden und ein repräsentativer Wert für das tatsächliche Rauschverhalten der digitalen Darstellung erhalten wird. Unter der "Standardabweichung der Amplitude" ist dabei die Standardabweichung einer Verteilungsfunktion zu verstehen, welche die Häufigkeit einer Amplitude des Rauschens der Bildinformation eines Bildpunktes über der Amplitude des Rauschens aufträgt. Die "Amplitude des Rauschens" beschreibt wiederum die durch Rauschen hervorgerufene Abweichung einer Bildinformation von einem eigentlich zu erwartenden Wert. Zur Bestimmung einer solchen Amplitude kann beispielsweise für einen Bereich der digitalen Darstellung, welche eine relativ homogene Verteilung des Wertes der Bildinformationen enthält, den Mittelwert der Bildinformationen ermittelt und anschließend ausgehend von diesem Mittelwert die lokalen Abweichungen je Bildpunkt ermittelt. Die lokalen Abweichungen von dem Mittelwert können dann als Amplitude des Rauschens angenommen werden.

Dabei ist nach einer bevorzugten Ausführungsform vorgesehen, dass die Standardabweichung der Amplitude des Rauschens für einen Bildpunkt der Objektdarstellung aus den Bildinformationen von Bildpunkten innerhalb einer definierten Umgebung um den Bildpunkt bestimmt wird. Hierzu kann beispielsweise vorgesehen sein, dass bei der Bestimmung der Amplitude des Rauschens für einen Bildpunkt zunächst eine lokale Umgebung um den Bildpunkt ermittelt wird, innerhalb dessen die Bildinformationen der weiteren enthaltenen Bildpunkte näherungsweise gleich sind. Aus den Bildinformationen dieser Bildpunkte kann dann die Amplitude des statistischen Rauschens für den Bildpunkt ermittelt werden. Die Verwendung von Bildinformationen von Bildpunkten innerhalb einer definierten Umgebung um einen Bildpunkt zur Bestimmung der Stärke des statistischen Rauschens hat dabei den Vorteil, dass eine lokal variierende Stärke des statistischen Rauschens berücksichtigt werden kann. Es kann nämlich durchaus vorkommen, dass die Stärke des statistischen Rauschens zum einen von der Position eines Bildpunktes innerhalb einer digitalen Darstellung, oder zum anderen von der Bildinformation des Bildpunktes abhängt. Diesem Umstand wird durch die Verwendung von Bildpunkten aus einer definierten Umgebung eines Bildpunktes zur Bestimmung einer Rauschamplitude Rechnung getragen.

Der zuvor beschriebene Gedanke, wonach die Stärke des statistischen Rauschens für unterschiedliche Bereiche einer digitalen Darstellung unterschiedlich stark ausgeprägt sein kann, kann auch auf die Ermittlung einer Korrelationslänge übertragen werden. So ist es durchaus auch möglich, dass die Korrelationslänge, über die die Bildinformationen von Bildpunkten noch miteinander korreliert sind, für verschiedene Bereiche einer digitalen Darstellung unterschiedlich groß ist. Daher ist nach einer weiteren Ausführungsform vorgesehen, dass das Verfahren ferner die Unterteilung der Objektdarstellung in wenigstens zwei Teilbereiche aufweist, wobei für die Teilbereiche jeweils separat die Korrelationslänge für die Bildpunkte eines der Teilbereiche ermittelt wird. Die Wahl der Teilbereiche kann dabei durch die Lage von Bildpunkten innerhalb der digitalen Darstellung bestimmt sein, oder durch die in den entsprechenden Bildpunkten enthaltene Bildinformation. Wird dabei für verschiedene Teilbereiche eine unterschiedliche Korrelationslänge ermittelt, wird dementsprechend bei der Bestimmung der Teilmengen zur Bestimmung eines Fehlers eines Parameters die entsprechende Korrelationslänge der Teilmenge von Bildpunkten verwendet, der die bei der Fehlerbestimmung verwendeten Bildpunkte angehören.

Die Korrelation der Bildinformationen unterschiedlicher Bildpunkte kann eine Vielzahl von Gründen haben. Beispielsweise kann eine Korrelation der Bildinformationen von Bildpunkten durch eine inkorrekte geometrische Kalibrierung der Messapparatur verursacht werden. Dabei können Effekte, welche zu einer Korrelation der Bildinformationen führen, gleichzeitig auch mitverantwortlich für das statistische Rauschen der Bildinformationen sein. So kann beispielsweise bei Verwendung eines Computertomographen zur Ermittlung der Objektdarstellung ein Photonenrauschen sowie eine Detektorunschärfe ein möglicher Grund für eine Korrelation von Bildinformationen sein. In dem Fall, dass ein statistisches Rauschen Auslöser der Korrelation von Bildinformationen ist, kann aus dem statistischen Rauschen selbst eine Information über die Korrelationslänge der Bildinformationen erhalten werden. Ausgehend von dieser Überlegung ist nach einer Ausführungsform des Verfahrens vorgesehen, dass es sich bei der Korrelationslänge um die Korrelationslänge des Rauschens der Bildinformationen der Bildpunkte handelt. Dies ist insbesondere dann vorteilhaft, wenn die durch das statistische Rauschen hervorgerufene Korrelation der vorherrschende Faktor bezüglich der Korrelation der Bildinformationen ist.

Wie zuvor bereits ausgeführt wurde, kann es bei der digitalen Darstellung des Objekts vorkommen, dass sich das statistische Rauschen der Bildinformationen in unterschiedlichen Bereichen der digitalen Objektdarstellung unterschiedlich stark niederschlägt. Dieser Umstand wird nach einer weiteren Ausführungsform berücksichtigt, indem die Korrelationslänge des die Bildinformationen überlagernden Rauschens aus den Bildinformationen von Bildpunkten eines Teilbereichs der Objektdarstellung ermittelt wird, wobei die Bildinformationen innerhalb des Teilbereichs einen homogenen Bereich des dargestellten Objekts abbilden. Unter einem "homogenen Bereich" ist dabei ein Teilbereich der digitalen Darstellung zu verstehen, innerhalb dessen die Bildinformationen der enthaltenen Bildpunkte näherungsweise konstant bzw. gleich sind, bzw. innerhalb dessen man davon ausgehen kann, dass die Bildinformationen der enthaltenen Bildpunkte abgesehen vom Rauschen der Bildinformationen nahezu konstant sind.

Wird das die Bildinformationen überlagernde statistische Rauschen als maßgebender Faktor für die Korrelation der Bildinformationen angesehen, ist nach einer weiteren Ausführungsform vorgesehen, dass das Ermitteln der Korrelationslänge das Ermitteln der Autokorrelation des die Bildinformationen überlagernden statistischen Rauschens beinhaltet. Zur Ermittlung der Autokorrelation des statistischen Rauschens kann beispielsweise entlang eines Profils von Bildpunkten die jeweilige Amplitude des statistischen Rauschens über der Position des Bildpunktes aufgetragen werden. Durch Ermitteln der Autokorrelation dieser Verteilung mit sich selbst kann dann die Korrelationslänge des statistischen Rauschens ermittelt werden. Dieser Ansatz ist dabei grundsätzlich in beliebig vielen Dimensionen durchführbar.

Ferner kann nach einer weiteren Ausführungsform das Ermitteln der Autokorrelation das Ermitteln der spektralen Leistungsdichte der Bildinformationen und das Durchführen einer Fourier-Analyse der spektralen Leistungsdichte umfassen, woraus wiederum die Korrelationslänge des Rauschens ermittelt werden kann. Dabei erhält man als Autokorrelationsfunktion meist eine Glockenkurve, welche durch einen entsprechenden Fit mit einer Gauss-Kurve angenähert werden kann. Aus der so erhaltenen Gauss-Kurve kann dann beispielsweise die Korrelationslänge als Vielfaches der Standardabweichung der Gauss-Kurve bestimmt werden. Durch Wahl eines entsprechenden Faktors kann dabei durch einen Anwender festgelegt werden, ab welcher Distanz zwischen Bildpunkten der Grad der Korrelation entsprechender Bildinformationen der Bildpunkte als "nicht mehr korreliert" bzw. "ausreichend unkorreliert" angesehen werden kann. Die Bestimmung der Korrelationslänge auf diesem Wege ist möglich, da es sich bei einem statistischen Rauschen, wie es im Allgemeinen im Rahmen der Datennahme mittels eines bildgebenden Verfahrens auftritt, um einen stationären statistischen Prozess handelt. In diesem Fall sind die spektrale Leistungsdichte und die Autokorrelationsfunktion des statistischen Rauschens entsprechend dem Wiener-Chintschin-Theorem über die Fourier-Transformation miteinander verknüpft.

Einige der zuvor beschriebenen Ausführungsformen zielen auf die Auswertung des statistischen Rauschens zur Ermittlung der Korrelationslänge der Bildinformationen ab. Es kann jedoch in bestimmten Fällen vorkommen, dass eine hinreichend genaue Auswertung der Informationen, welche zu dem Verhalten des statistischen Rauschens vorliegen, zur Bestimmung der Korrelationslänge nicht möglich ist. Es ist jedoch nach einer alternativen Ausführungsform auch möglich, dass es sich bei der Korrelationslänge um die Breite einer Punktspreizfunktion der digitalen Darstellung handelt. Die Punktspreizfunktion einer Darstellung gibt dabei allgemein eine Auskunft darüber, wie eine an sich punktförmige Quelle aufgrund einer Abbildung durch das abbildende System "verschmiert" wird, also von der idealen, punktförmigen Abbildung abweicht. Dabei folgt die Punktspreizfunktion meist einer Glockenkurve, welche, analog zu dem zuvor beschriebenen Ansatz zur Ermittlung einer Korrelationslänge aus einer Autokorrelation, durch eine Gauß-Kurve angenähert werden kann. Die "Breite" der so erhaltenen Punktspreizfunktion kann dann als Vielfaches der Standardabweichung der Gauß-Kurve angenommen werden, wobei durch die Wahl des entsprechenden Vorfaktors das maximal zulässige Maß an Korrelation zwischen Bildinformationen gewählt werden kann. Die Analyse der Punktspreizfunktion erlaubt dabei eine Abschätzung einer oberen Grenze für Korrelationslänge.

Die Verwendung der Punktspreizfunktion zur Ermittlung der Korrelationslänge wird dabei vorzugsweise nur dann vorgesehen, wenn eine hinreichend genaue Analyse des statistischen Rauschens nicht möglich oder sehr aufwändig ist. Dies kann beispielsweise bei Objektdarstellungen der Fall sein, in denen nur sehr wenige Bereiche mit homogen verteilten Bildinformationen vorliegen, sodass eine Abschätzung der Amplitude des statistischen Rauschens, wie sie zuvor exemplarisch beschrieben wurde, nicht oder nur schwer möglich ist. In diesem Fall kann dann die Korrelation des statistischen Rauschens durch eine Betrachtung der Punktspreizfunktion abgeschätzt werden, die, wie zuvor bereits ausgeführt wurde, unter anderem eine Korrelation des statistischen Rauschens mehrerer Bildpunkte verursacht. Die Punktspreizfunktion eines abbildenden Systems kann dabei als globale Information für das abbildende System vorliegen und kann bei der Durchführung des Verfahrens beispielsweise aus einem entsprechenden Speichermedium ausgelesen werden.

Es ist jedoch nach einer weiteren Ausführungsform auch möglich, die Punktspreizfunktion aus den Bildinformationen der Objektdarstellung zu ermitteln. Hierzu ist nach der Ausführungsform vorgesehen, dass das Ermitteln der Korrelationslänge zunächst das Ermitteln einer zweiten Teilmenge von Bildpunkten, wobei die Bildinformationen der zweiten Teilmenge von Bildpunkten wenigstens eine Materialgrenzfläche des Objekts abbilden. Anschließend wird ein Verlauf der Bildinformationen der zweiten Teilmenge von Bildpunkten entlang einer Normalen der Materialgrenzfläche ermittelt. Die Punktspreizfunktion wird dann aus dem ermittelten Verlauf der Bildinformationen ermittelt, woraufhin abschließend die Breite der Punktspreizfunktion ermittelt wird. Die so ermittelte Breite der Punktspreizfunktion wird dann als Korrelationslänge der Objektdarstellung verwendet. Dabei kann zur Ermittlung der Punktspreizfunktion aus dem Verlauf der Bildinformationen beispielsweise der Gradient der Bildinformationen entlang des Verlaufs ermittelt werden. Der so ermittelte Gradient gibt dann direkt Aufschluss über die Punktspreizfunktion der Abbildung im Bereich des gewählten Verlaufs.

Der vorbeschriebenen Ausführungsform liegt die Erkenntnis zugrunde, dass ein eigentlich scharfer bzw. stufenförmiger Verlauf der Grauwerte in Normalenrichtung einer Materialgrenzfläche aufgrund der Punktspreizfunktion des abbildenden Systems zu einem Verlauf verwaschen wird, der dem Integral der Punktspreizfunktion entspricht. Folglich kann aus der Ableitung dieses Verlaufs bzw. allgemeiner aus dem Gradient des Verlaufs die Punktspreizfunktion des abbildenden Systems ermittelt werden. Dabei wird, wie zuvor bereits ausgeführt wurde, die Punktspreizfunktion in einer bevorzugten Ausführungsform für verschiedene Bereiche der Objektdarstellung jeweils separat ermittelt. Auf diese Weise kann dem Umstand Rechnung getragen werden, dass die Punktspreizfunktion eines abbildenden Systems für verschiedene Bereiche einer Objektdarstellung unterschiedlich stark ausgeprägt sein kann. Ferner kann bei der Verwendung der Punktspreizfunktion zur Ermittlung der Korrelationslänge auch eine Richtungsabhängigkeit der Punktspreizfunktion berücksichtigt werden, sodass für unterschiedliche Richtungen innerhalb der Objektdarstellung unterschiedliche Korrelationslängen angenommen werden.

Grundsätzlich kann das erfindungsgemäße Verfahren sowohl die Ermittlung einer Korrelationslänge aus dem statistischen Rauschen der Bildinformationen, als auch aus der Punktspreizfunktion der Abbildung beinhalten. Dabei wird vorzugsweise zuerst geprüft, ob bei der Analyse des statistischen Rauschens hinreichend genaue Informationen erhalten werden können, sodass eine Abschätzung der Korrelationslänge möglich wird. Sollte dies nicht der Fall sein, kann in einem nachgeordneten weiteren Schritt geprüft werden, ob stattdessen die Korrelationslänge aus der Punktspreizfunktion der Abbildung ermittelt werden kann.

Ferner können auch für unterschiedliche Bereiche der Objektdarstellung unterschiedliche Ansätze gewählt werden, sodass die jeweilig gewählten Ansätze an die Eigenschaften der Bildpunkte des jeweiligen Bereichs angepasst sind.

Es kann dabei insbesondere vorkommen, dass in bestimmten Bereiche weder die Punktspreizfunktion der Abbildung, noch das statistische Rauschen geeignet sind, eine Korrelationslänge mit einer hinreichenden Genauigkeit zu ermitteln. In diesen Fällen kann ferner vorgesehen sein, dass für Bereiche, in denen eine solche Ermittlung nicht möglich ist, eine Interpolation der Korrelationslänge ausgehend von Bereichen vorgenommen wird, in denen eine Ermittlung der Korrelationslänge noch möglich war. Auf diese Weise kann im Idealfall jedem Bildpunkt der Objektdarstellung eine Korrelationslänge zugeordnet werden.

Nach einer Ausführungsform handelt es sich bei der messtechnischen Abbildung um eine computertomographische Messung, wobei eine Bildinformation eines Bildpunktes die lokale Röntgenabsorption des Objekts an der Stelle des Bildpunktes beschreibt. Dabei werden die Bildinformationen der Bildpunkte durch eine geeignete Rekonstruktionsmathematik aus Projektionsdaten ermittelt, welche im Zuge der computertomographischen Abbildung ermittelt wurden. Es kann in diesem Fall zweckmäßig sein, das Rauschverhalten des verwendeten Computertomographen direkt aus den Projektionsdaten zu ermitteln. Hierzu sind die zuvor beschriebenen Ansätze zur Ermittlung der Amplitude des Rauschens und der Korrelationslänge des Rauschens identisch auch für Projektionsdaten anwendbar. Die so erhaltenen Informationen bzgl. einer Unsicherheit und einer Korrelation der Projektionsdaten können dann durch Anwendung derselben Rekonstruktionsmathematik in entsprechende Informationen für die Bildinformationen der rekonstruierten Objektdarstellung umgerechnet werden.

In einem weiteren Aspekt betrifft die Erfindung ein Computerprogrammprodukt mit auf einem Computer ausführbaren Instruktionen, welche auf einem Computer ausgeführt den Computer dazu veranlassen, das Verfahren, wie es zuvor beschrieben wurde, durchzuführen

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine schematische Darstellung eines Rasters mit Bildpunkten,
Fig. 2 eine schematische Darstellung eines Ausschnitts einer Objektdarstellung und
Fig. 3 eine schematische Darstellung einer alternativen Objektdarstellung.

Im Folgenden werden einander ähnliche oder identische Merkmale mit denselben Bezugszeichen gekennzeichnet.

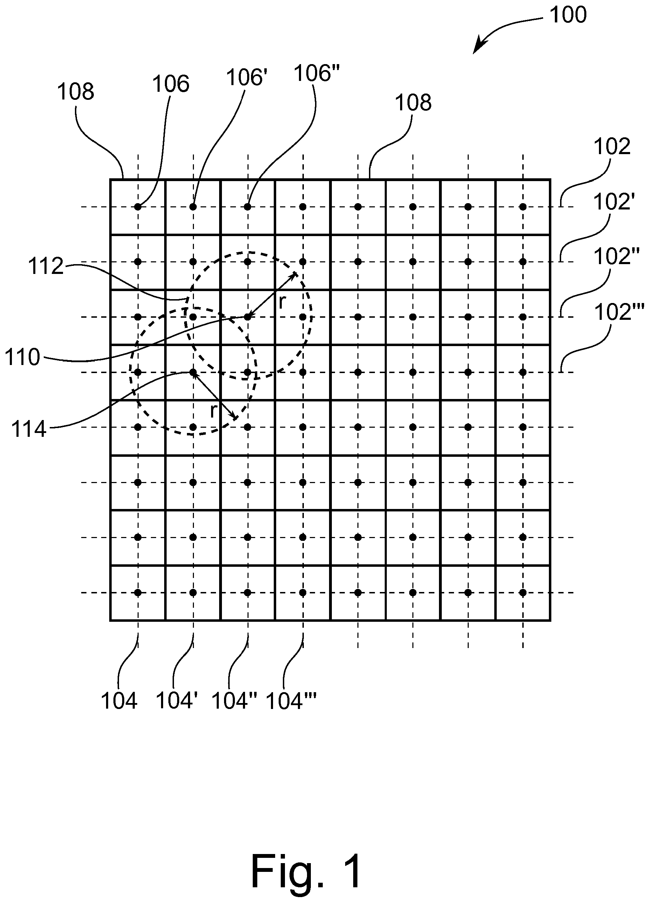

Die Figur 1 zeigt eine schematische Darstellung eines Rasters 100 zur Darstellung eines mittels eines bildgebenden Verfahren abgebildeten Objekts. Bei einem solchen Objekt kann es sich beispielsweise um ein Werkstück oder ähnliches handeln. Das Raster 100 wird im Wesentlichen durch eine Vielzahl von Rasterlinien 102 und 104 gebildet, welche in dem in Figur 1 dargestellten Raster 100 ein quadratisches Raster bilden. Unter einem quadratischen Raster 100 ist dabei ein Raster 100 zu verstehen, bei dem sowohl horizontale Rasterlinien 102, als auch vertikale Rasterlinien 104 jeweils äquidistant zueinander angeordnet sind, wobei die horizontalen Rasterlinien 102 die vertikalen Rasterlinien 104 im rechten Winkel schneiden.

An den Schnittpunkten der Rasterlinien 102 und 104 sind in dem dargestellten Raster 100 jeweils Bildpunkte 106 angeordnet. Zur Darstellung eines Objekts mittels des Rasters 100 wird das Objekt mit dem Raster 100 überlagert. Anschließend werden den Bildpunkten 106 Bildinformationen zugeordnet, welche das Objekt innerhalb eines definierten Bereiches 108 um einen Bildpunkt 106 herum charakterisieren. Am Beispiel einer computertomographischen Abbildung kann die Bildinformation eines Bildpunktes 106 beispielsweise die lokale Röntgendichte des Objekts im Bereich 108 um den Bildpunkt 106 wiedergeben. Dabei ist in der in Figur 1 dargestellten Gestaltung des Rasters 100 der Bereich 108 um einen Bildpunkt 106, welcher bei der Bestimmung der Bildinformation berücksichtigt wird, quadratisch gewählt. Zur Ermittlung einer Bildinformation eines Bildpunktes 106 kann beispielsweise ein Mittelwert für einen materialspezifischen Parameter innerhalb des Bereichs 108 bestimmt und dem Bildpunkt 106 als Bildinformation zugeordnet werden.

Wie zuvor bereits ausgeführt wurde, wird in einer bevorzugten Ausführungsform die Abbildung des untersuchten Objekts durch eine computertomographische Abbildung erzeugt. Dabei wird ein Objekt zwischen einer Röntgenquelle und einem Detektor angeordnet und mit von der Röntgenquelle erzeugter Röntgenstrahlung bestrahlt. Die durch das Objekt gestreute oder transmittierte Röntgenstrahlung wird dann durch den Detektor registriert und gemessen. Dabei ist ein Detektor im Allgemeinen aus einer Vielzahl von photosensitiven Zellen aufgebaut, welche auch als "Detektorpixel" bezeichnet werden. Die Detektorpixel sind dabei zumeist in einem regelmäßigen Raster angeordnet. Durch die Bestrahlung eines solchen Detektors wird daher automatisch ein gerastertes Projektionsbild des bestrahlten Objekts erzeugt, da die einzelnen Detektorpixel nur eine über die Fläche eines Detektorpixels gemittelte Bestrahlungsintensität detektieren können. Aus den so ermittelten gerasterten Projektionsbildern kann dann durch eine geeignete Rückprojektion eine Abbildung der Geometrie des Objekts berechnet werden, welche ausgehend von der Rasterung der zugrunde gelegten Projektionsdaten ebenfalls gerastert ist.

Durch eine Vielzahl von Effekten ist die dabei ermittelte Bildinformation, welche einem Bildpunkt 106 der gerasterten Objektdarstellung zugeordnet ist, mit den Bildinformationen von Bildpunkten 106` in der Umgebung des Bildpunkts 106 korreliert. Unter einer Korrelation ist dabei zu verstehen, dass die Bildinformationen der korrelierten Bildpunkte 106 eine gemeinsame Information enthalten, bzw. dass die Bildinformationen der Bildpunkte 106 und 106' miteinander in Beziehung stehen. Gründe für eine solche Korrelation können beispielsweise darin bestehen, dass bei der Aufnahme der Projektionsdaten Abbildungseffekte auftreten, welche eine Information, welche eigentlich nur einem einzelnen Detektorpixel oder letzten Endes einem einzelnen Bildpunkt 106 zugeordnet sein müsste, verschmiert wird, sodass sie mehreren Bildpunkten 106 zugeordnet wird. Ein solcher Effekt kann beispielsweise durch die Punkspreizfunktion des abbildenden Systems beschrieben werden.

Ferner unterliegen elektronische Abbildungssysteme grundsätzlich einem statistischen Rauschen, welches eine Abweichung der ermittelten Bildinformationen von den eigentlich zu messenden, idealen Bildinformationen bewirkt. Ein solches statistisches Rauschen beeinflusst zunächst alle Bildpunkte der Abbildung. Innerhalb einer bestimmten Umgebung um einen Bildpunkt wirkt sich dabei das statistische Rauschen auf alle Bildpunkte der Umgebung in ähnlicher Weise bzw. ähnlich stark aus, sodass auch durch das Rauschen eine Korrelation der Bildinformationen der Bildpunkte 106 hervorgerufen wird.

Die Korrelation von Bildinformationen erstreckt sich ausgehend von der Bildinformation eines ersten Bildpunkts 106 dabei im Allgemeinen nicht über die gesamte Objektdarstellung, sondern ist vielmehr räumlich begrenzt. Charakterisierend für diese räumliche Begrenzung ist die Korrelationslänge. Die Korrelationslänge gibt dabei eine Information darüber an, wie weit Bildpunkte 106, 106' voneinander beabstandet sein müssen, sodass angenommen werden kann, dass die Bildinformationen der Bildpunkte 106, 106' nicht mehr miteinander in Verbindung stehen.

In der Figur 1 ist exemplarisch für einen Bildpunkt 110, der sich auf dem Schnittpunkt der Rasterlinien 102" und 104" befindet, die Korrelationslänge als Kreis 112 mit Radius r dargestellt. Für alle Bildpunkte 106 innerhalb dieses Kreises 112 muss angenommen werden, dass die Bildinformationen der Bildpunkte 106 mit der Bildinformation des Bildpunktes 110 korreliert sind. Erfindungsgemäß werden daher alle Bildpunkte 106 innerhalb des Kreises 112, abgesehen von dem Bildpunkt 110, nicht berücksichtigt, wenn aus den Bildinformationen dieser Bildpunkte ein Parameter des abgebildeten Objekts bestimmt werden soll.

Um ausgehend von dem Bildpunkt 110 weitere Bildpunkte 106 zu ermitteln, deren Bildinformation nicht korreliert ist und welche folglich zur Bestimmung eines Parameters und insbesondere dessen Fehler herangezogen werde können, kann wie folgt vorgegangen werden: Zunächst wird ein Bildpunkt 106 ausgewählt, welcher knapp außerhalb des zuvor bestimmten Kreises 110 angeordnet ist. Beispielsweise kann hierbei der Bildpunkt 114 ausgewählt werden, welcher auf dem Schnittpunkt der Rasterlinien 102‴ und 104' liegt. Für die Bildinformation dieses Bildpunktes 114 kann dann wiederum die Korrelationslänge r` bestimmt werden. Dabei kann die Korrelationslänge entweder individuell für diesen Punkt bestimmt werden, oder es kann auf eine Korrelationslänge zurückgegriffen werden, welche beispielsweise zuvor für die Bildpunkte 106 einer bestimmten Region einer Objektdarstellung ermittelt wurden.

Ausgehend von der so ermittelten Korrelationslänge r' wird dann erneut ermittelt, welche Bildpunkte 106 innerhalb eines Kreises 116 mit Radius r` um den Bildpunkt 114 angeordnet sind. Die dabei bestimmten Bildpunkte 106 werden dann bei einer weiteren Bestimmung von Parametern des dargestellten Objekts ebenfalls nicht berücksichtigt. Aus den verbleibenden Bildpunkten 106 kann dann wiederum ein Bildpunkt 106 ausgewählt werden, für den dann erneut die Korrelationslänge ermittelt wird und bestimmt wird, welche Bildpunkte 106 auf Grundlage dieser Ermittlungen nicht weiter zur Bestimmung von Parametern des Objekts verwendet werden. Diese Schrittfolge kann dabei wiederholt werden, bis unter den für die Parameterbestimmung relevanten Bildpunkten 106 keine Bildpunkte mit korrelierten Bildinformationen mehr existieren, oder bis eine anderweitige Abbruchbedingung erfüllt wurde. Die so ermittelten Bildpunkte 106 und die jeweils zugeordneten Bildinformationen werden dabei in einer Teilmenge der Bildpunkte zusammengefasst und im Weiteren zur Bestimmung von Parametern des Objekts und zur Bestimmung eines Fehlers des ermittelten Parameters verwendet.

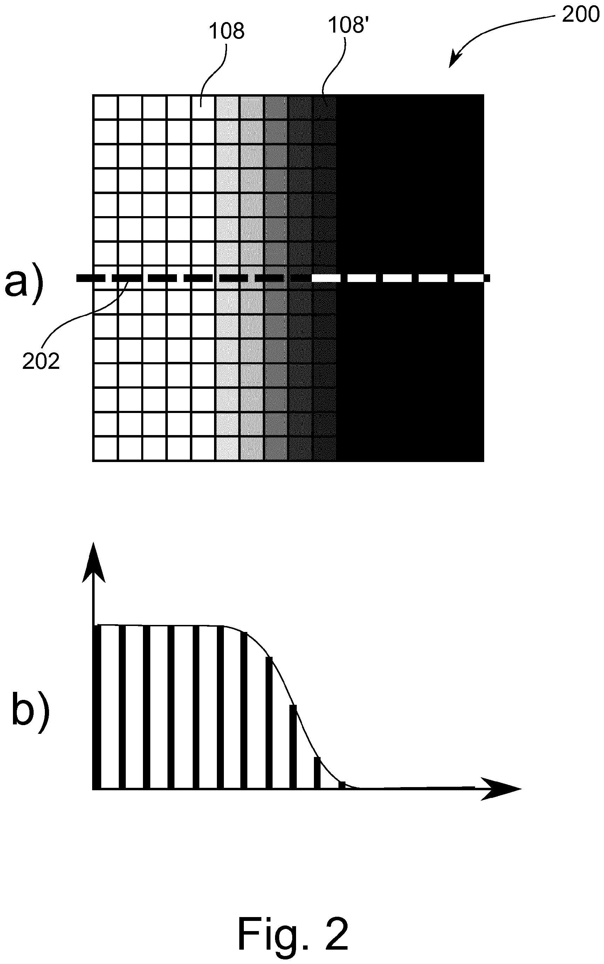

In der Figur 2 a) ist eine schematische Darstellung eines Ausschnitts aus einer Objektdarstellung 200 gezeigt. Die Objektdarstellung 200 verwendet dabei ein Raster 100, wie es zuvor mit Bezug auf die Figur 1 beschrieben wurde. Es handelt sich demnach um ein quadratisches Raster 100, bei dem die jeweiligen Bereiche 108, welche einem Bildpunkt 106 zugeordnet sind und den jeweiligen Wert der Bildinformation durch Darstellung eines Grauwerts graphisch repräsentieren, quadratisch ausgeführt und regelmäßig angeordnet sind. Dabei sind die Bildpunkte 106 und Rasterlinien 102 und 104 in der Figur 2 a) aus Gründen der Übersichtlichkeit nicht mehr dargestellt.

In dem in Figur 2 a) dargestellten Bildausschnitt der Objektdarstellung ist eine vertikale Materialgrenzfläche des dargestellten Objekts dargestellt, also ein Bereich, in dem ein erstes Material des Objekts an ein zweites Material angrenzt. Dabei weist das auf der linken Seite dargestellte Material eine stärkere Röntgenabsorption auf, als das auf der rechten Seite dargestellte Material, da der Bereich auf der linken Seite des Bildausschnitts heller dargestellt ist, als das Material auf der rechten Seite des Bildausschnitts. Beispielsweise kann es sich bei dem dargestellten Bereich um eine Grenzfläche des dargestellten Objekts handeln, an der das Objekt gegenüber der Umgebungsluft begrenzt ist.

Aufgrund des im Allgemeinen scharfen Übergangs zwischen zwei Materialien, welcher an einer solchen Materialgrenzfläche stattfindet, wäre zu erwarten, dass auch in der Objektdarstellung 200 eine solche scharfe Kante zu beobachten wäre. Dies ist jedoch aufgrund einer Vielzahl von Faktoren nicht der Fall. Ein wesentlicher Faktor, welcher zu einem Verschmieren scharfer Konturen führt, ist die Punktspreizfunktion des abbildenden Systems. Dabei handelt es sich um eine im Allgemeinen näherungsweise gaußförmige Funktion, welche von einer Vielzahl von Parametern des abbildenden Systems abhängt. Durch eine Faltung einer an sich scharf begrenzten Materialgrenzfläche mit der Punktspreizfunktion des abbildenden Systems resultiert der in der Figur 2 a) dargestellte Verlauf.

Eine weitere Folge der Punktspreizfunktion besteht darin, dass die Bildinformationen der einzelnen Bildpunkte 106 miteinander korreliert sind, da in die Bildinformation eines Bildpunktes 106 immer auch ein Teil der Bildinformationen von benachbarten Bildpunkten 106' einfließt und umgekehrt.

Ein weiterer, in Figur 2 aus Gründen der Übersichtlichkeit nicht dargestellter Faktor, der zu einer Korrelation von Bildinformationen führt, besteht in dem statistischen Rauschen, mit dem die Bildinformationen der Bildpunkte 106 überlagert sind. Bei einem statistischen Rauschen handelt es sich dabei um eine statistisch verteilte Abweichung der Bildinformationen von einem idealen, unter Berücksichtigung weiterer Abbildungseffekte zu erwartenden Wert. Dabei kann die Abweichung sowohl positiv als auch negativ sein und folgt im Allgemeinen einer statistischen Verteilung. Da die Bildinformationen aller Bildpunkte gleichermaßen einem statistischen Rauschen unterliegen, wird auch durch das statistische Rauschen ebenfalls eine Korrelation der Bildinformationen verursacht.

Wie zuvor bereits ausgeführt wurde, stellt die Erfindung auf die Auswahl einer Teilmenge von Bildpunkten 106 für die Auswertung einer Objektdarstellung 200 hinsichtlich eines Parameters des Objekts und eines Fehlers des Parameters dergestalt ab, dass die Bildinformationen der ausgewählten Bildpunkte 106 nicht korreliert sind. Bei einem Parameter des Objekts kann es sich beispielsweise um die genaue Position der Materialgrenzfläche in der Objektdarstellung 200 handeln, welche aufgrund der Punktspreizfunktion des abbildenden Systems nicht scharf abgebildet werden kann. Zur Bestimmung einer solchen Materialgrenzfläche kann beispielsweise ein Verlauf der Grauwerte der Objektdarstellung 200 entlang einer Geraden 202 untersucht werden, wobei sich die Gerade 200 vorzugsweise senkrecht zur Materialgrenzfläche erstreckt und folglich eine Oberflächennormale der Materialgrenzfläche darstellt.

Ein exemplarischer Grauwertverlauf entlang der in Figur 2 a) dargestellten Geraden 202 ist in der Figur 2 b) dargestellt. Dabei ist auf der y-Achse der Grauwert eines Bildpunktes 106 über einer Position des Bildpunktes 106 entlang der Geraden 202, dargestellt durch die Position auf der x-Achse, wiedergegeben. Aus der Kenntnis des Grauwertverlaufs kann mit Hilfe an sich bekannter Verfahren, wie beispielsweise dem Iso-50 Verfahren die tatsächliche Position der Materialgrenzfläche bestimmt werden. Aus der Kenntnis eines Fehlers der dabei verwendeten Grauwerte kann ferner auch ein Fehler der bestimmten Lage der Materialgrenzfläche in an sich bekannter Weise, beispielsweise durch eine Fehlerfortpflanzung nach Gauß, bestimmt werden.

Sowohl für die Bestimmung der Lage der Materialgrenzfläche, als auch zur Bestimmung eines Fehlers der Lagebestimmung kann es jedoch vorteilhaft sein, wenn die zugrunde gelegten Bildinformationen nicht korreliert sind. Die Bestimmung der Lage einer Materialgrenzfläche ist dabei vereinfacht, da eine geringere Zahl von Messwerten berücksichtigt werden muss, was die Berechnung insgesamt vereinfacht. Dabei wird bei geeigneter Wahl der Bildpunkte auch kein Informationsverlust durch ein Auslassen einzelner Bildpunkte verursacht, da aufgrund der Korrelation der Bildinformationen die Bildinformation eines ausgelassenen Bildpunktes im Idealfall auch in der Bildinformation der benachbarten Bildpunkte enthalten ist.

Die Bestimmung eines Fehlers für die Lage der Materialgrenzfläche ist ferner vereinfacht, da die Fehlerbestimmung aus einer Fehlerfortpflanzung im Allgemeinen mit einfacheren mathematischen Mitteln möglich ist, wenn die der Fehlerbetrachtung zugrunde gelegten Daten nicht korreliert sind.

Wie es zuvor mit Bezug auf Figur 1 beschrieben wurde, kann aus den Bildpunkten 106 der Objektdarstellung 200 eine Teilmenge von Bildpunkten 106 ausgewählt werden, welche zur Bestimmung der Lage der Materialgrenzfläche sowie einer Bestimmung der Unsicherheit der Lage verwendet werden können. Hierzu wird zunächst die Korrelationslänge der Objektdarstellung bestimmt. Im Wesentlichen sind erfindungsgemäß hierzu zwei Ansätze vorgesehen.

In einem ersten Ansatz wird die Korrelationslänge als Korrelationslänge des statistischen Rauschens ermittelt. Hierzu kann beispielsweise entlang einer Geraden, eines Bereichs oder beliebig gearteten Verlaufs innerhalb der Objektdarstellung, welche sich vorzugsweise innerhalb eines Bereichs mit Bildpunkten mit homogenen Grauwerten erstreckt, die Amplitude des statistischen Rauschens der Grauwerte hinsichtlich der Autokorrelation der Amplitude des Rauschens analysiert werden. Unter einem Bereich mit homogenen Grauwerten ist beispielsweise der Bereich ganz links oder ganz rechts in der in Figur 2 a) dargestellten Objektdarstellung 200 gemeint. In diesen Bereichen sind die Grauwerte der Bildpunkte abgesehen von dem überlagerten statistischen Rauschen näherungsweise konstant, sodass auf einfache Art und Weise die Amplitude des statistischen Rauschens je Bildpunkt ermittelt werden kann.

Aus dem Verlauf der Werte der Amplitude des Rauschens entlang einer Strecke innerhalb der Objektdarstellung 200 kann dann die Autokorrelation des Rauschens in an sich bekannter Weise ermittelt werden. Die hierbei ermittelte Korrelationslänge kann dann beispielsweise in der zuvor beschriebenen Art und Weise verwendet werden, um eine Teilmenge von unkorrelierten Bildpunkten zu ermitteln, welche dann für weitere Berechnungen verwendet werden können.

Aufgrund des Verlaufs der Grauwerte im Bereich der Materialgrenzfläche kann in diesem Bereich die Bestimmung einer Korrelationslänge schwer oder sogar unmöglich sein. Es ist jedoch nach einer Ausführungsform möglich, die Korrelationslänge für einen solchen Bereich aus den Korrelationslängen benachbarter Bereiche durch Anwendung eines Interpolationsverfahrens abzuschätzen. So wird auch in solchen Bereichen eine Abschätzung der Korrelation und eine geeignete Auswahl von Bildpunkten möglich.

Neben der Analyse des Rauschverhaltens kann ferner die Punktspreizfunktion der Abbildung zur Bestimmung der Korrelationslänge herangezogen werden. Hierzu kann beispielsweise vorgesehen sein, dass entlang einer Normalen einer Materialgrenzfläche, wie beispielsweise der Geraden 202, ein Verlauf der Grauwerte ermittelt wird. Der Verlauf der zugrundeliegenden Punktspreizfunktion ergibt sich dann auf einfache Art und Weise aus dem Gradienten dieses Verlaufs. Aus der Kenntnis des Verlaufs der Punktspreizfunktion kann dann wiederum aus der Breite, insbesondere der Halbwertsbreite der Punktspreizfunktion die durch die Punktspreizfunktion hervorgerufene Korrelationslänge bestimmt werden.

Es ist dabei erfindungsgemäß auch möglich, dass je nachdem, ob eine Methode zur Bestimmung der Korrelationslänge anwendbar ist, oder nicht, in verschiedenen Bereichen der Objektdarstellung 200 unterschiedliche Varianten zur Bestimmung einer Korrelationslänge angewendet werden. Beispielsweise kann in den Bereichen links und rechts der Materialgrenzfläche in der Objektdarstellung 200 der Figur 2 a) auf einfache Art und Weise die Korrelationslänge des Rauschens ermittelt werden, während im Bereich der Materialgrenzfläche eine Bestimmung der Korrelationslänge aus der Punkspreizfunktion einfacher zu realisieren ist. Daher kann je nach vorliegender Situation das entsprechende Verfahren zur Bestimmung der Korrelationslänge verwendet werden.

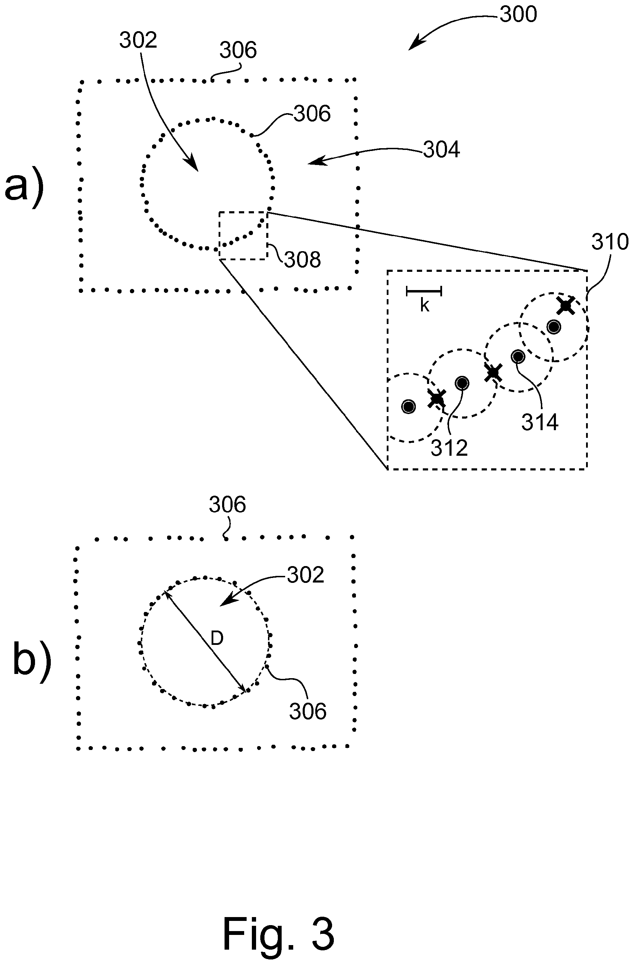

Die Figur 3 zeigt eine zu der in Figur 2 gezeigten Objektdarstellung 200 alternative Objektdarstellung 300, bei der einzelne Bildpunkte 306 nicht in einem Raster angeordnet sind. Vielmehr wird durch die Bildpunkte 306 der Objektdarstellung 300 die Lage einer Materialgrenzfläche und insbesondere einer Oberfläche des dargestellten Objekts codiert. Hierzu sind die Bildpunkte nur an solchen Positionen vorhanden, an denen zuvor durch eine entsprechende Datenauswertung die Existenz einer Materialgrenzfläche ermittelt wurde. Eine solche Darstellung kann sowohl zweidimensional als auch dreidimensional ausgeführt sein. Die Position der Bildpunkte kann dabei durch Koordinaten in einem zwei- oder dreidimensionalen Raum definiert sein. Für eine bessere Darstellung der durch die Bildpunkte kodierten Materialgrenzfläche, können die Bildpunkte ferner auch vernetzt sein, sodass eine geschlossene Darstellung der Oberfläche bzw. Materialgrenzfläche auch in den Zwischenräumen zwischen den Bildpunkten resultiert.

Eine solche Objektdarstellung 300 kann beispielsweise durch Auswertung einer Objektdarstellung, wie sie in Figur 2 gezeigt ist, erhalten werden. Hierzu kann aus den Bildpunkten 106 bzw. Bereichen 108 zugeordneten Grauwerten durch Anwendung entsprechender Kantenfindungsoperatoren eine Materialgrenzfläche des dargestellten Objekts ermittelt werden. Diese wird dann durch die Bildpunkte 306 codiert. Die Bildinformation, welche den Bildpunkten 306 der Objektdarstellung 300 zugeordnet ist, ist dabei die Anwesenheit einer Materialgrenzfläche an der Position des Bildpunktes. Ferner kann einem solchen Bildpunkt 306 auch eine Information darüber zugeordnet sein, welche Art von Materialgrenzfläche an dieser Stelle abgebildet ist, bzw. auf welcher Seite des Bildpunktes 306 welches Material vorhanden ist.

Bei der Ermittlung der Oberflächendarstellung 300 aus den Grauwerten einer Objektdarstellung entsprechend Figur 2 schlägt sich die Korrelation der einzelnen Bildpunkte, welche bei der Kantenfindung berücksichtigt wurden, auch auf die Bildinformation bzgl. der Lage einer Materialgrenzfläche nieder. Folglich kann die Korrelation von Bildpunkten 306, welche eine Materialgrenzfläche darstellen, aus der Korrelation der der Kantenfindung zugrunde gelegten Bildpunkte und folglich aus den ursprünglichen Grauwerten der Figur 2 ermittelt werden. Ein Fehler bzw. eine Unsicherheit bezüglich der Lage einer Materialgrenzfläche kann dabei ebenfalls bspw. mittels einer Modellrechnung, aus dem Rauschen der Bildinformationen jener Bildpunkte bestimmt werden, welche zur Ermittlung der Materialgrenzfläche herangezogen wurden.

Bei dem in der Objektdarstellung 300 der Figur 3 dargestellten Objekt handelt es sich beispielsweise um ein quaderförmiges Element 304, wie einen Metallblock, mit einer im Wesentlichen kreisrunden Ausnehmung 302 in der Mitte. Dabei ist in der Figur 3 eine Schnittansicht des Objekts dargestellt. Die Bildpunkte 306, die die gekrümmte Oberfläche der Ausnehmung 302 darstellen, sind dabei erkennbar dichter angeordnet, als die Bildpunkte, welche die Außenflächen des quaderförmigen Elements 304 abbilden. Dies kann darin begründet sein, dass zur Darstellung einer glatten Fläche deutlich weniger Oberflächenpunkte notwendig sind, als zur exakten Darstellung einer gekrümmten Oberfläche. Es wird an dieser Stelle jedoch darauf hingewiesen, dass die Objektdarstellung 300 lediglich als Beispiel zur Verdeutlichung der Erfindung zu verstehen ist. Es kann durchaus auch vorgesehen sein, dass die Dichte der Bildpunkte 306 für alle dargestellten Oberflächen eines Objekts gleich ist.

In der Figur 3 a) ist dabei ein Teilbereich 308 der Bildpunkte 306, welche die Oberfläche der Ausnehmung 302 darstellen, markiert und in einer vergrößerten Teildarstellung 310 rechts unterhalb der Objektdarstellung 300 abgebildet. In der vergrößerten Darstellung 310 ist dabei exemplarisch eine Korrelationslänge k der Bildinformationen der Bildpunkte 306 des Teilbereichs 308 in Form eines Balkens zur Längendarstellung abgebildet. Die Korrelationslänge k kann dabei mittels der zuvor beschriebenen Verfahren ermittelt worden sein. Es wird im Folgenden exemplarisch angenommen, dass die Korrelationslänge der Bildinformationen für die gesamte Objektdarstellung 300 überall gleich ist.

Zur Bestimmung der ersten Teilmenge von Bildpunkten 306, welche im Folgenden für das Ermitteln eines Parameters des dargestellten Objekts verwendet werden sollen, wird nun zunächst von einem ersten Bildpunkt 312 ausgehend ermittelt, ob weitere Bildpunkte 306 um weniger als den Abstand k von dem ersten Bildpunkt 312 beabstandet sind. Dies ist in Figur 3 exemplarisch dargestellt, indem ein Kreis mit Radius k um den ersten Bildpunkt 312 gezogen wurde. Alle Bildpunkte 306 abgesehen von dem ersten Bildpunkt 312, welche innerhalb des Kreises liegen, werden im Folgenden bei der Ermittlung der ersten Teilmenge von Bildpunkten 306 nicht mehr berücksichtigt, was durch ein die entsprechenden Bildpunkte überlagerndes X dargestellt ist. Anschließend wird ein weiterer Bildpunkt 314 ausgewählt und erneut geprüft, ob Bildpunkte 306 existieren, welche um weniger als den Abstand k von dem Bildpunkt 314 entfernt sind. Auf diese Weise werden sukzessive all jene Bildpunkte ermittelt, welche um wenigstens den Abstand k voneinander entfernt sind und deren Bildinformation folglich als unkorreliert angesehen wird. Diese Bildpunkte 306 sind in der Teildarstellung 310 eingekreist, während die nicht für die erste Teilmenge berücksichtigten Bildpunkte mit einem X markiert sind.

Die Figur 3 b) zeigt die Gesamtheit aller Bildpunkte 306 der Objektdarstellung der Figur 3 a), welche jeweils um wenigstens den Abstand k voneinander beabstandet sind. Diese Bildpunkte 306 können zur Bestimmung eines Parameters des dargestellten Objekts und insbesondere für eine entsprechende Fehlerbetrachtung für den bestimmten Parameter verwendet werden, da ihre Bildinformationen hinreichend unkorreliert sind. Hierzu ist in der Figur 3 b) exemplarisch angedeutet, dass aus den Bildpunkten 306, welche die Oberfläche der Ausnehmung 302 abbilden, durch Anpassen eines Kreises der Durchmesser D der Ausnehmung 302 ermittelt wird. Die Ermittlung eines Fehlers für den so ermittelten Durchmesser D kann dabei, aufgrund der unkorrelierten Messwerte, welche der Bestimmung des Durchmessers D zugrunde gelegt wurden, mit einer vereinfachten Mathematik erfolgen.

Obwohl die Figuren 2 und 3 nur zweidimensionale Ausgestaltungen von Objektdarstellungen 200 mit darin angeordneten Bildpunkten 106 zeigen, sind die vorstehenden Ausführungen analog auch auf eine dreidimensionale Darstellung eines Objekts übertragbar. Ferner kann die Erfindung durchaus auch in anderen Rastern als dem in den Figuren 1 und 2 dargestellten quadratischen Raster 100 angewendet werden. Insbesondere kann es sich bei einem Raster auch um ein lokal unterschiedlich gestaltetes Raster handeln, welches in verschiedenen Bereichen der Objektdarstellung unterschiedliche Gitterkonstanten oder unterschiedliche Ausrichtungen der verwendeten Rasterlinien 102, 104 aufweist.

### Bezugszeichenliste

- 100: Raster
- 102: horizontale Rasterlinie
- 104: vertikale Rasterlinien
- 106: Bildpunkt
- 108: Bereich
- 110: Bildpunkt
- 112: Kreis
- 114: Bildpunkt
- 200: Objektdarstellung
- 202: Gerade/Oberflächennormale
- 300: Objektdarstellung
- 302: Ausnehmung
- 304: quaderförmiges Element
- 306: Bildpunkt
- 308: Teilbereich
- 310: Teildarstellung
- 312: Bildpunkt
- 314: Bildpunkt

- r: Radius
- k: Korrelationslänge
- D: Durchmesser

## Patentansprüche

1. Computer-implementiertes Verfahren zur Bestimmung von Fehlern wenigstens eines aus einer digitalen Darstellung eines Objekts abgeleiteten Parameters des Objekts, wobei die digitale Darstellung eine Vielzahl von in einem Raster angeordneten Bildpunkten aufweist, wobei einem Bildpunkt wenigstens eine Bildinformation zugeordnet ist, welche einen materialspezifischen Wert des Objekts an der Position des Bildpunktes quantifiziert, wobei die Bildinformation aus einer messtechnischen Abbildung des Objekts resultiert und mit einem statistischen Rauschen überlagert ist,
wobei aufgrund der messtechnischen Abbildung des Objekts die Bildinformation eines ersten Bildpunktes mit den Bildinformationen von Bildpunkten innerhalb einer durch eine Korrelationslänge der Bildinformation definierten Umgebung des ersten Bildpunktes korreliert ist, wobei das Verfahren die nachfolgenden Schritte aufweist:
• Ermitteln der Objektdarstellung, wobei als Objektdarstellung ein Oberflächenmodell aus den Bildinformationen, die als Grauwerte vorliegen, abgeleitet wird,
• Ermitteln der Korrelationslänge der Objektdarstellung,
• Ermitteln einer ersten Teilmenge von Bildpunkten aus der Vielzahl von Bildpunkten, wobei die Bildpunkte der ersten Teilmenge von Bildpunkten in der Objektdarstellung um wenigstens die Korrelationslänge voneinander beabstandet sind,
• Ermitteln des wenigstens einen Parameters aus den Bildinformationen der ersten Teilmenge von Bildpunkten, wobei der wenigstens eine Parameter die Lage der das dargestellte Objekt begrenzenden Materialgrenzflächen, eine Bemaßung einer Teilgeometrie des Objekts oder eine lokale Eigenschaft eines Materials wiedergibt, und
• Ermitteln eines Fehlers für den ermittelten wenigstens einen Parameter aus den Bildinformationen der ersten Teilmenge von Bildpunkten.

2. Verfahren nach Anspruch 1, **dadurch gekennzeichnet, dass** das Ermitteln des Fehlers das Ermitteln der Stärke des statistischen Rauschens von Bildinformationen der Bildpunkte beinhaltet, wobei der Fehler der Bildinformationen aus der Stärke des statistischen Rauschens abgeleitet wird.

3. Verfahren nach Anspruch 2, **dadurch gekennzeichnet, dass** die Stärke des statistischen Rauschens aus den Bildinformationen der Bildpunkte ermittelt wird.

4. Verfahren nach einem der Ansprüche 2 oder 3, **dadurch gekennzeichnet, dass** es sich bei der Stärke des statistischen Rauschens um die Standardabweichung der Amplitude des statistischen Rauschens handelt.

5. Verfahren nach Anspruch 4, **dadurch gekennzeichnet, dass** die Standardabweichung der Amplitude des statistischen Rauschens für einen Bildpunkt der Objektdarstellung aus den Bildinformationen von Bildpunkten innerhalb einer definierten Umgebung um den Bildpunkt bestimmt wird.

6. Verfahren nach einem der vorherigen Ansprüche, **dadurch gekennzeichnet, dass** das Verfahren die Unterteilung der Objektdarstellung in wenigstens zwei Teilbereiche aufweist, wobei für die Teilbereiche jeweils separat die Korrelationslänge für die Bildpunkte eines der Teilbereiche ermittelt wird.

7. Verfahren nach einem der vorherigen Ansprüche, **dadurch gekennzeichnet, dass** es sich bei der Korrelationslänge um die Korrelationslänge des Rauschens der Bildinformationen der Bildpunkte handelt.

8. Verfahren nach Anspruch 7, **dadurch gekennzeichnet, dass** die Korrelationslänge des die Bildinformationen überlagernden Rauschens aus den Bildinformationen von Bildpunkten eines Teilbereichs der Objektdarstellung ermittelt wird, wobei die Bildinformationen innerhalb des Teilbereichs einen homogenen Bereich des dargestellten Objekts abbilden.

9. Verfahren nach Anspruch 7 oder 8, **dadurch gekennzeichnet, dass** das Ermitteln der Korrelationslänge das Ermitteln der Autokorrelation des die Bildinformationen überlagernden Rauschens beinhaltet.

10. Verfahren nach Anspruch 9, **dadurch gekennzeichnet, dass** das Ermitteln der Autokorrelation das Ermitteln der spektralen Leistungsdichte der Bildinformation und/oder des die Bildinformation überlagernden Rauschens und das Durchführen einer Fourier-Analyse der spektralen Leistungsdichte umfasst.

11. Verfahren nach einem der vorherigen Ansprüche 1 bis 6, **dadurch gekennzeichnet, dass** es sich bei der Korrelationslänge um eine Breite einer Punktspreizfunktion der digitalen Darstellung handelt.

12. Verfahren nach Anspruch 11, **dadurch gekennzeichnet, dass** das Ermitteln der Korrelationslänge die folgenden Schritte aufweist:
• Ermitteln einer zweiten Teilmenge von Bildpunkten, wobei die Bildinformationen der zweiten Teilmenge von Bildpunkten wenigstens eine Materialgrenzfläche des Objekts abbilden,
• Ermitteln eines Verlaufs der Bildinformationen der zweiten Teilmenge von Bildpunkten entlang einer Normalen der Materialgrenzfläche,
• Ermitteln der Punktspreizfunktion aus dem ermittelten Verlauf der Bildinformationen, und
• Ermitteln der Breite der Punktspreizfunktion.

13. Verfahren nach einem der vorhergehenden Ansprüche, **dadurch gekennzeichnet, dass** es sich bei der messtechnischen Abbildung um eine computertomographische Messung handelt, wobei eine Bildinformation eines Bildpunktes die lokale Röntgenabsorption des Objekts an der Stelle des Bildpunktes beschreibt.

14. Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

## Claims

1. Computer-implemented method for determining errors of at least one parameter of the object derived from a digital object representation, wherein the digital representation comprises a plurality of image points arranged in a raster, wherein at least one piece of image information is associated with an image point, which quantifies a measurementspecific value of the object at the position of the image point, wherein the image information results from a metrological imaging of the object and is superimposed with a statistical noise,
wherein, based on the metrological mapping of the object, the image information of a first image point is correlated with the image information of image points within a vicinity of the first image point defined by a correlation length of the image information, the method comprising the following steps:
- determining the object representation, wherein a surface model is derived as the object representation from the image information which are present as gray values,
- determining the correlation length of the object representation,
- determining a first subset of image points from the plurality of image points, the image points of the first subset of image points in the object representation being spaced apart from one another by at least the correlation length,
- determining the at least one parameter from the image information of the first subset of image points, the at least one parameter representing the position of the material interfaces bounding the represented object, a dimension of a partial geometry of the object or a local property of a material, and
- determining an error for the determined at least one parameter from the image information of the first subset of image points.

2. Method according to claim 1, **characterized in that** determining the error includes determining the strength of the statistical noise of image information of the image points, wherein the error of the image information is derived from the strength of the statistical noise.

3. Method according to claim 2, **characterized in that** the strength of the statistical noise is determined from image information of the image points.

4. Method according to one of claims 2 or 3, **characterized in that** the strength of the statistical noise is the standard deviation of the amplitude of the statistical noise.

5. Method according to claim 4, **characterized in that** the standard deviation of the amplitude of the statistical noise for an image point of the object representation is determined from the image information of image points within a defined environment around the image point.

6. Method according to one of the previous claims, **characterized in that** the method has the subdivision of the object representation into at least two subregions, the correlation length for the image points of one of the subregions being separately determined for each of the subregions.

7. Method according to one of the previous claims, **characterized in that** the correlation length is the correlation length of the noise of the image information of the image points.

8. Method according to claim 7, **characterized in that** the correlation length of the noise superimposing the image information is determined from the image information of image points of a partial area of the object representation, the image information within the partial area representing a homogeneous area of the represented object.

9. Method according to claim 7 or 8, **characterized in that** the determination of the correlation length includes the determination of the autocorrelation of the noise superimposing the image information.

10. Method according to claim 9, **characterized in that** determining the autocorrelation comprises determining the power spectral density of the image information and/or the noise superimposing the image information and performing a Fourier analysis of the power spectral density.

11. Method according to any of the preceding claims 1 to 6, **characterized in that** the correlation length is a width of a point spread function of the digital representation.

12. Method according to claim 11, **characterized in that** determining the correlation length comprises the following steps:
- determining a second subset of image points, wherein the image information of the second subset of image points maps at least one material interface of the object,
- determining a course of the image information of the second subset of image points along a normal of the material boundary surface,
- determining the point spread function from the determined course of the image information, and
- determining the width of the point spread function.

13. Method according to one of the preceding claims, **characterized in that** the metrological imaging is a computer tomographic measurement, wherein an image information of an image point describes the local X-ray absorption of the object at the location of the image point.

14. Computer program product comprising instructions executable on a computer which, when executed on a computer, cause the computer to perform the method according to any one of the preceding claims.

## Revendications

1. Procédé mis en oeuvre par ordinateur pour déterminer des erreurs d'au moins un paramètre de l'objet déduit d'une représentation numérique d'un objet, la représentation numérique présentant une pluralité de points d'image disposés en une grille, au moins une information d'image étant associée à un point d'image, qui quantifie une valeur spécifique au matériau de l'objet à la position du point d'image, l'information d'image résultant d'une représentation technique de mesure de l'objet et étant superposée à un bruit statistique,
l'information d'image d'un premier point d'image étant corrélée, sur la base de la représentation technique de mesure de l'objet, avec les informations d'image de points d'image situés dans un environnement du premier point d'image défini par une longueur de corrélation de l'information d'image, le procédé comprenant les étapes suivantes :
- déterminer la représentation de l'objet, un modèle de surface étant déduit comme représentation de l'objet à partir des informations d'image qui sont présentes sous forme de valeurs de gris,
- déterminer la longueur de corrélation de la représentation de l'objet,
- déterminer un premier sous-ensemble de points d'image à partir de la pluralité de points d'image, les points d'image du premier sous-ensemble de points d'image étant espacés les uns des autres d'au moins la longueur de corrélation dans la représentation d'objet,
- déterminer l'au moins un paramètre à partir des informations d'image du premier sous-ensemble de points d'image, l'au moins un paramètre indiquant la position des surfaces limites de matériau délimitant l'objet représenté, une dimension d'une géométrie partielle de l'objet ou une propriété locale d'un matériau, et
- déterminer une erreur pour le au moins un paramètre déterminé à partir des informations d'image du premier sous-ensemble de points d'image.

2. Procédé selon la revendication 1, **caractérisé en ce que** la détermination de l'erreur comprend la détermination de l'intensité du bruit statistique des informations d'image des points d'image, l'erreur des informations d'image étant déduite de l'intensité du bruit statistique.

3. Procédé selon la revendication 2, **caractérisé en ce que** l'intensité du bruit statistique est déterminée à partir des informations d'image des points d'image.

4. Procédé selon l'une des revendications 2 ou 3, **caractérisé en ce que** l'intensité du bruit statistique est l'écart-type de l'amplitude du bruit statistique.

5. Procédé selon la revendication 4, **caractérisé en ce que** l'écart-type de l'amplitude du bruit statistique pour un point d'image de la représentation de l'objet est déterminé à partir des informations d'image de points d'image dans un environnement défini autour du point d'image.

6. Procédé selon l'une des revendications précédentes, **caractérisé en ce que** le procédé présente la subdivision de la représentation de l'objet en au moins deux zones partielles, la longueur de corrélation pour les points d'image d'une des zones partielles étant déterminée séparément pour chacune des zones partielles.

7. Procédé selon l'une des revendications précédentes, **caractérisé en ce que** la longueur de corrélation est la longueur de corrélation du bruit des informations d'image des points d'image.

8. Procédé selon la revendication 7, **caractérisé en ce que** la longueur de corrélation du bruit se superposant aux informations d'image est déterminée à partir des informations d'image des points d'image d'une zone partielle de la représentation de l'objet, les informations d'image à l'intérieur de la zone partielle représentant une zone homogène de l'objet représenté.

9. Procédé selon la revendication 7 ou 8, **caractérisé en ce que** la détermination de la longueur de corrélation comprend la détermination de l'autocorrélation du bruit qui se superpose aux informations d'image.

10. Procédé selon la revendication 9, **caractérisé en ce que** la détermination de l'autocorrélation comprend la détermination de la densité spectrale de puissance de l'information d'image et/ou du bruit se superposant à l'information d'image et la réalisation d'une analyse de Fourier de la densité spectrale de puissance.

11. Procédé selon l'une quelconque des revendications précédentes 1 à 6, **caractérisé en ce que** la longueur de corrélation est une largeur d'une fonction d'étalement de point de la représentation numérique.

12. Procédé selon la revendication 11, **caractérisé en ce que** la détermination de la longueur de corrélation comprend les étapes suivantes :
- déterminer un deuxième sous-ensemble de points d'image, les informations d'image du deuxième sous-ensemble de points d'image représentant au moins une interface de matériau de l'objet,
- déterminer un tracé des informations d'image du deuxième sous-ensemble de points d'image le long d'une normale à la surface limite du matériau,
- déterminer la fonction d'étalement des points à partir du tracé déterminée des informations d'image, et
- déterminer la largeur de la fonction d'étalement des points.

13. Procédé selon l'une des revendications précédentes, **caractérisé en ce que** l'image technique de mesure est une mesure tomographique par ordinateur, une information d'image d'un point d'image décrivant l'absorption locale des rayons X de l'objet à l'endroit du point d'image.

14. Produit programme d'ordinateur comprenant des instructions exécutables sur un ordinateur, qui, exécutées sur un ordinateur, amènent l'ordinateur à exécuter le procédé selon l'une quelconque des revendications précédentes.
